# EUROPÄISCHE PATENTSCHRIFT

(11) **EP 1 640 101 B1**
(45) Veröffentlichungstag und Bekanntmachung des Hinweises auf die Patenterteilung: **31.07.2013**
(21) Anmeldenummer: 05017094.3
(22) Anmeldetag: 05.08.2005
(51) Int. Cl.: B23K 9/127, B05C 5/02, G01B 11/25

(54) **Verfahren zur Regelung eines automatischen Bearbeitungsprozesses**
Method for controlling an automated machining process
Méthode pour contrôler un procédé d'usinage automatique.

(30) Priorität: 13.08.2004 DE 102004039410
(43) Veröffentlichungstag der Anmeldung: 29.03.2006
(73) Patentinhaber: Precitec GmbH & Co. KG, 76571 Gaggenau-Bad Rotenfels (DE)
(72) Erfinder: Schürmann, Bert, Dr., 76593 Gernsbach (DE); Warth, Andreas, 76571 Gaggenau (DE)
(74) Vertreter: Wagner, Bernhard Peter

(56) Entgegenhaltungen:
- EP-A1- 0 862 963
- WO-A-97/23324
- FR-A- 2 618 224
- US-A1- 4 724 302
- US-A1- 5 264 678
- AGAPAKIS J E: "APPROACHES FOR RECOGNITION AND INTERPRETATION OF WORKPIECE SURFACE FEATURES USING STRUCTURED LIGHTING" INTERNATIONAL JOURNAL OF ROBOTICS RESEARCH, SAGE SCIENCE PRESS, THOUSAND OAKS, US, Bd. 9, Nr. 5, 1. Oktober 1990 (1990-10-01), Seiten 3-16, XP000162382 ISSN: 0278-3649

## Beschreibung

Die Erfindung betrifft ein Verfahren zur Regelung eines automatischen Bearbeitungsprozess.

Heutzutage werden in Industrie und Handwerk eine Vielzahl von Bearbeitungsprozessen automatisch von Bearbeitungsmaschinen und Robotern ausgeführt. Beispiel hierfür sind das Schweißen und Schneiden von Werkstücken, insbesondere mit entsprechenden Hochleistungslasern, die Beschichtung von Werkstücken mit Hilfe von Pulverbeschichtungseinrichtungen und das Auftragen von Klebstoff auf Fügeflächen von miteinander zu verklebenden Werkstücken. Bei derartigen Bearbeitungsprozessen werden die jeweiligen Bearbeitungsköpfe der Bearbeitungsmaschinen oder Roboter entsprechend einem Bearbeitungsprogramm gesteuert, wobei zur Qualitätssicherung ein oder mehrere Betriebsparameter, wie beispielsweise Bearbeitungsabstand, Vorschubgeschwindigkeit und dergleichen zusätzlich geregelt werden.

Beispielsweise ist aus der DE 199 38 328 C2 ein Verfahren und eine Vorrichtung zum automatisierten Aufbringen einer Klebstoffraupe auf eine Fügefläche eines Werkstücks bekannt, bei dem die Klebstoffraupe, also ein Klebstoffstrang, durch eine Austrittsöffnung einer Auftragsdüse auf die Fügefläche aufgebracht wird, während die Auftragsdüse relativ zur Fügefläche bewegt wird. Um eine möglichst gleichmäßige Klebstoffraupe zu erhalten, es ist dabei nicht nur erforderlich, dass die Auftragsdüse mit einer entsprechenden Vorschubsgeschwindigkeit gegenüber der Fügefläche bewegt wird, sondern auch dass der Abstand der Fügefläche zur Auftragsdüse abgesehen von Toleranzen konstant gehalten wird. Hierzu wird der Abstand zwischen der Auftragsdüse und der Fügefläche mit Hilfe eines berührungslosen Messverfahrens, zum Beispiel induktiv, kapazitiv oder optisch gemessen, sodass in Abhängigkeit vom Vergleich des gemessenen Abstandes mit seinem Soll-Wert ein Stellsignal erzeugt wird, auf das hin Auftragsdüse und Fügefläche so gegeneinander bewegt werden, dass der Messwert des Abstands zwischen Auftragsdüse und Fügefläche in einem vorgegebenen, einstellbaren Wertebereich liegt.

Die Lage und die Quantität des aufgetragenen Klebstoffs lässt sich mit einem derartigen Verfahren weder überwachen noch beeinflussen. welches Dokument als nächstliegender Stand der Technik anzusehen ist Aus der FR 2 618 224 A1 ist ein Verfahrer zur Regelung eines automatischen Bearbeitungsprozesses bekannt, bei dem auf einen mittels eines Bearbeitungskopfes bearbeiteten Bereich eines Werkstücks eine Lichtlinie projiziert wird. Die Lichtlinie wird auf eine Empfängeranordnung abgebildet, wobei aus dem Lichtlinienbild ein Profil der Werkstückoberfläche im bearbeiteten Bereich ermittelt wird. Dabei wird wenigstens ein Bearbeitungsparameter, beispielsweise der Abstand zwischen Kleberraupe und einer Kante des Werkstücks, in Abhängigkeit vom Vergleich eines Ist-Wertes eines aus dem Profilverlauf ermittelnden Parameters mit seinem Soll-Wert geregelt. Hierbei wird jedoch die Lichtlinie senkrecht zur Bearbeitungslinie auf das Werkstück projiziert.

Die US 4,724,302 A beschreibt eine Zuführprozesssteuerung unter Verwendung einer optischen Profildatenerfassung, um Höhe, Breite und Querschnittsfläche eines Strangs oder einer Kleberaupe zu regeln. Hierfür wird ein Spurprofildetektor sowie ein Strangprofildetektor eingesetzt, wobei zwischen dem Spurprofildetektor und dem Strangprofildetektor ein Bearbeitungskopf angeordnet ist, der einen Strang oder eine Kleberaupe auf ein Werkstück aufträgt.

Aus der Schrift von Agapakis J E: "Approaches for Recognition and Interpretation of Workpiece Surface Features Using Structured Lighting" International Journal of Robotics Research, Sage Science Press, Thousand Oaks, US, Bd. 9, Nr. 5, 1. Oktober 1990, Seiten 3-16, XP000162382 ISSN:02783649 werden verschiedene Ansätze zur Erkennung und Deutung von Merkmalen einer Werkstückoberfläche unter Verwendung von Lichtlinien vorgestellt. Hierbei wird beispielsweise ein linienförmiger Laserstrahl auf ein Werkstück geworfen, um verschiedene Kantenbereiche auf diesem Werkstück mittels einer CCD-Kamera zu erfassen und entsprechend zu interpretieren.

Der Erfindung liegt die Aufgabe zugrunde, ein weiteres Verfahren zur Regelung eines automatischen Bearbeitungsprozesses bereit zu stellen, mit dem insbesondere die gewünschte Qualität eines Bearbeitungsergebnisses sichergestellt und im Vergleich mit herkömmlichen Verfahren verbessert werden kann.

Diese Aufgabe wird durch das Verfahren nach Anspruch 1 gelöst. Vorteilhafte Weiterbildungen und Ausgestaltungen der Erfindung sind in den Unteransprüchen beschrieben.

Es ist bei einem Verfahren zur Regelung eines automatischen Bearbeitungsprozesses vorgesehen, dass auf einen mittels eines Bearbeitungskopfes bearbeiteten Bereich eines Werkstücks eine Lichtlinie projiziert wird, dass die Lichtlinie auf eine Empfängeranordnung abgebildet wird, dass aus dem Licht - linienbild ein Profil der Werkstückoberfläche im bearbeiteten Bereich ermittelt wird, und dass wenigstens ein Betriebsparameter in Abhängigkeit vom Vergleich eines Ist-Wertes eines aus dem Profilverlauf ermittelten Parameters mit seinem Soll-Wert geregelt wird.

Auf diese Weise lässt sich also die Oberflächenstruktur einer bearbeiteten Werkstückoberfläche erfassen, um anhand dieser Struktur, die durch den ermittelten Profilverlauf beschrieben wird. Aussagen über das Bearbeitungsergebnis zu erhalten, aus denen sich der Bearbeitungserfolg und damit auch die Bearbeitungsqualität ableiten lässt.

Zeigt die ermittelte Oberflächenstruktur an, dass das Bearbeitungsergebnis von dem gewünschten abweicht, so lässt sich aus dieser Abweichung ein Stellsignal zur Regelung eines Bearbeitungsparameters bestimmen.

Um eine fortlaufende Regelung zu erreichen, ist vorgesehen, dass die Lichtlinie in einen bearbeiteten Bereich eines Werkstücks projiziert wird, der bezüglich einer Relativbewegung zwischen Werkstück und Bearbeltungskopf dicht hinter dem Bearbeltungskopf liegt und der Bewegung des Bearbeitungskopfes folgt.

Weiter ist vorgesehen, dass die Lichtlinie so auf die Werkstückoberfläche projiziert wird, dass sie sowohl auf dem bearbeiteten Bereich als auch auf einer von der Werkstückbearbeitung unabhängigen, vorzugsweise linienförmigen Werkstückstruktur liegt, wobei sie eine linienförmige Werkstückstruktur in dem Punkt schneidet, in dem ein von einem zentralen Punkt des Bearbeitungsbereichs auf die linienförmige Werkstückstruktur gefälltes Lot diese trifft.

Auf diese Weise lässt sich nicht nur die durch den Bearbeitungsprozess geschaffene Oberfläche des Werkstücks im Bearbeitungsbereich ermitteln, sondern es lässt sich auch die tatsächliche Lage des Bearbeitungsbereichs auf dem Werkstück bestimmen.

Ist dabei vorzugsweise der aus dem Profilverlauf ermittelte Parameter der Abstand zwischen dem Bearbeitungsbereich, vorzugsweise einer Bearbeitungslinie, -naht oder -kante, und der vorzugsweise linienförmigen Werkstückstruktur. Es lässt sich damit so regelnd in die Maschinensteuerung eingreifen, dass der Abstand abgesehen von Toleranzen immer der vorgegebene Abstand zwischen Bearbeitungsbereich und Bezugsstruktur des Werkstücks ist. Der erfasste Parameter des Bearbeitungsergebnisses, ist also in diesem Falle gleichzeitig der zu regelnde Bearbeitungsparameter.

Bei einem ersten konkreten Ausführungsbeispiel ist vorgesehen, dass der zu regelnde Bearbeitungsprozess ein Schweißprozess ist, und dass die Lichtlinie quer über der Schweißnaht liegt.

Ein zweites Ausführungsbeispiel zeichnet sich dadurch aus, dass der zu regelnde Bearbeitungsprozess ein Schzteidprozess ist, und dass die Lichtlinie quer über der Schnittlinie liegt.

Bei einer weiteren Ausführungsform ist vorgesehen, dass der zu regelnde Bearbeitungsprozess ein Auftragen eines Materials ist und dass die Lichtlinie quer über zumindest einer Stufe zwischen aufgetragenem Material und Werkstückoberfläche liegt, wobei das aufzutragende Material ein Klebstoff. der vorzugsweise als Klebstoffstrang oder Klebstoffraupe aufgetragen wird, oder ein Pulver zur Beschichtung einer Werkstückoberfläche sein kann.

Gemäß der Erfindung liegt die Lichtlinie nicht nur in Bearbeitungsrichtung dicht hinter dem Bearbeitungsbereich, sondern schließt mit diesen auch einen von 90° verschiedenen Winkel ein, wobei die Lichtlinie derart schräg über der Bearbeitungslinie liegt, dass sie eine linienförmige Werkstückstruktur in dem Punkt schneidet, in dem ein von einem zentralen Punkt des Bearbeitungsbereichs auf die linienförmige Werkstückstruktur gefälltes Lot diese trifft.

Hierdurch lässt sich der augenblickliche Abstand des Bearbeitungsbereiches von der Werkstückstruktur ermitteln, sodass eine praktisch verzögerungsfreie Regelung dieses Abstands möglich wird.

Bei einer bevorzugten Weiterbildung ist ferner vorgesehen, dass der aus dem Profilverlauf ermittelte Parameter eine Breite und/oder Höhe oder Tiefe und/ oder Querschnittsfläche ist.

Wird insbesondere beim Materialauftrag aus dem Profilverlauf eine Querschnittsfläche des aufgetragenen Materials ermittelt, so lässt sich daraus die Menge des aufgetragenen Materials bestimmen, sodass vorteilhafter Weise vorgesehen sein kann, dass der zu regelnde Bearbettungsparameter eine Materialauftragsmenge ist.

Eine andere Weiterbildung zeichnet sich dadurch aus, dass der zu regelnde Bearbeitungsparameter eine Vorschubsgeschwindigkeit des Bearbeitungskopfes, und/oder ein Abstand zwischen Bearbeitungskopf und Werkstück ist.

Das erfindungsgemäße Verfahren lässt sich mit einer Vorrichtung ausführen, die folgendes umfasst: eine Lichtquelle, eine erste, zwischen der Lichtquelle und einem zu bearbeiteten Werkstück angeordnete Optik, die eine Lichtlinie auf einen mittels eines Bearbeitungskopfes bearbeiteten Bereich des Werkstücks projiziert, eine zweite Optik, die die Lichtlinie auf eine Empfängeranordnung abbildet, wobei die optische Achse der zweiten Optik mit einer Projektionsrichtung der ersten Optik einen Winkel einschließt, und eine Auswerteschaltung, die aus Ausgangssignalen der Empfängeranordnung einen Profilverflauf erfasst, aus dem ein Ist-Wert zumindest eines Parameters ermittelt wird, die den Ist-Wert des zumindest einen Parameters mit seinem Soll-Wert vergleicht, und die ein Signal zur Regelung zumindest eines Bearbeitungsparameters an die Bearbeitungsmaschine liefert.

Eine besonders schmale und dabei doch für die jeweils verwendete Empfängeranordnung gut sichtbare Lichtlinie lässt sich erzeugen, wenn die Lichtquelle eine Laserdiode ist und die erste Optik eine zylinderoptik zur Ausbildung eines Fächerstrahls umfasst.

Zweckmäßigerweise ist die Empfängeranordnung eine CCD-Matrix.

Gemäß einer Ausführung ist vorgesehen, dass eine die Empfängeranordnung und die zweite Optik umfassende Kamera vorgesehen ist, die Pixelbilder liefert.

Bei einer Ausgestaltung ist vorgesehen, dass die Auswerteschaltung eine Bildverarbeitungseinheit zur Profilermittelung, eine Auswerteeinheit zur Parameterermittelung, eine Vergleichseinheit zum Vergleichen eines Ist-Wertes zumindest eines Parameters mit seinem Soll-wert, und eine Regeleinheit zur Ermittlung und Ausgabe eines Stellsignals zur Regelung zumindest eines Bearbeitungsparamters an die Bearbeitungsmaschine umfasst.

Um einer Bedienungsperson, die die mit einer wie oben angeführten Vorrichtung ausgerüstet Bearbeitungsmaschine einrichtet, programmiert, überwacht und/oder wartet, die Möglichkeit zu geben, den Bearbeitungsvorgang zu beobachten oder um die Programmierung beziehungsweise das Einrichten der Maschine zu erleichtern, ist ferner vorgesehen, dass eine Anzeigevorrichtung, insbesondere ein Bildschirm zur Darstellung eines von der Empfängeranordnung aufgenommenen bearbeiteten oder nicht bearbeiteten Bildes vorgesehen ist.

Die Erfindung wird im folgenden beispielsweise anhand der Zeichnung näher erläutert. Es zeigen:
Figur 1 eine vereinfachte schematische Darstellung eines Werkstücks mit einer einen Oberflächenbereich beobachtenden Kamera zur Erläuterung des erfindungsgemäßen Verfahrens;
Figur 2 eine vereinfachte schematische Darstellung einer Vorrichtung zur Erfassung eines Profilverlauf für die Durchführung des erfindungsgemäßen Verfahrens, und
Figur 3 ein vereinfachtes schematisches Blockschaltbild einer Vorrichtung zur Regelung eines Bearbeitungsprozesses in Verbindung mit einer Bearbeitungsmaschine, insbesondere mit einem Roboter zum Auftragen von Materialsträngen, insbesondere Klebstoffraupen.

In den verschiedenen Figuren der Zeichnung sind einander entsprechende Bauelemente mit gleichen Bezugszeichen versehen.

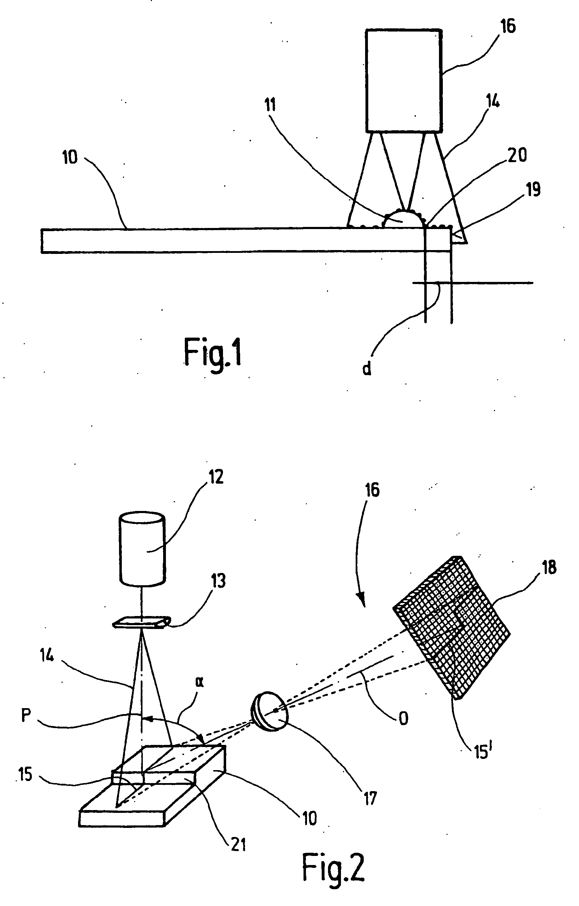

Wie in Figur 1 rein schematisch dargestellt ist, ist auf einem Werkstück 10 als Materialstrang ein Klebstoffstrang 11 aufgetragen, der im folgenden als Klebstoffraupe 11 bezeichnet wird. Ein mittels einer Lichtquelle, vorzugsweise einer Laserdiode 12 und einer als erste Optik dienenden Zylinderlinse 13 (siehe Figur 2) erzeugter Lichtfächer 14 wird im Bereich der aufgetragenen Klebstoffraupe 11 quer zu dieser auf die Werkstückoberfläche projiziert, um dort eine Lichtlinie 15 (wie in Figur 2 dargestellt) zu erzeugen.

Die Lichtlinie 15 wird mittels einer Kamera 16, die, wie in Figur 2 dargestellt, ein als zweite Optik dienendes Objektiv 17 und eine Empfängeranordnung 18 umfasst, beobachtet, um einen Profilverlauf der Oberflächenstruktur von Werkstück 10 und Klebstoffraupe 11 nahe einer Werkstückkante 19 zu erfassen. Aus dem Profilverlauf, der in Figur 1 durch eine fett punktierte Linie angedeutet ist, lässt sich sowohl die Kante 19 des Werkstücks 10 als auch der zur Kante 19 hin gelegene Rand 20 der Klebstoffraupe räumlich genau feststellen, so dass sich der Abstand d der Klebstoffraupe 11 von der Werkstückkante 19 berechnen lässt. Es wird also eine absolute Messung der Struktur oder Geometrie des bearbeiteten Bereichs ermöglicht, wobei gegebenenfalls auch durch die jeweilige Anordnung von Lichtlinie 15, Objektiv 17 und Empfängeranordnung 18 bedingte systematische Einflüsse rechnerich berücksichtigt werden.

Der gemessene Wert des Abstandes d zwischen dem Rand 20 der Klebstoffraupe 11 und der Kante 19 des Werkstücks 10 lässt sich dann mit einem Soll-wert vergleichen, um ein Stellsignal zu ermitteln, das zur Abstandsregelung verwendet werden kann, wie weiter unten näher erläutert wird.

Figur 2 zeigt die Erzeugung und Beobachtung einer Lichtlinie 15 auf einem Werkstück 10 in detaillierterer Form.

Obwohl die Erzeugung des Lichtfächers 14 mit Hilfe einer Laserdiode 12 und einer Zylinderlinsenanordnung 13 bevorzugt ist, kann auch jede andere geeignete helle Lichtquelle, zum Beispiel eine weiße oder farbige Leuchtdiode mit hoher Leuchtkraft, und jede andere geeignete Projektionsoptik, beispielsweise eine rotationssymmetrische Optik oder Zylinderoptik zur Abbildung eines beleuchteten Spalts eingesetzt werden.

Im dargestellten Ausführungsbeispiel gemäß Figur 2 wird der Lichtfächer 14 so auf die Oberfläche des Werkstücks 10 projiziert, dass seine Projektionsrichtung P im wesentlichen senkrecht zur Werkstückoberfläche ist.

Die Kamera 16 beobachtet die Lichtlinie 15 von schräg oben, so dass die optische Achse O des Objektivs 17 mit der Projektionsrichtung P des Lichtfächers 14 einen Winkel α einschließt, der größer als 0 und kleiner als 90° ist, und der vorzugsweise in einem Bereich von etwa 20° bis 60°, insbesondere zwischen 30 und 40° liegt. Ist der Winkel α zwischen der Projektionsrichtung P des Lichtfächers 14 und der optischen Achse O des Kameraobjektivs 17 zu klein, so wird ein Profilverlauf erfasst, der sehr flach und damit schwierig zu erkennen ist.

Ist der Winkel α zu groß, so kann die Helligkeit der abgebildeten Lichtlinie so gering werden, dass es ebenfalls Schwierigkeiten bei der Bestimmung des Profilverlaufs ergibt. Ein großer Winkel α führt darüber hinaus zu einer Relativ großen Baugröße, wenn der aus Laserdiode 12 und Zylinderlinse 13 bestehende Lichtliniengenerator zusammen mit der Kamera 16 in einem Gehäuse integriert werden soll.

Obwohl grundsätzlich jede Empfängeranordnung in der Kamera 16 benutzt werden kann, um ein auswertbares Bild der Lichtlinie 15 zu erzeugen, ist es bevorzugt, eine CCD Matrix, also einen CCD Bildsensor mit einer zweidimensionalen Anordnung von Photodioden zu verwenden, so dass das von der Empfängeranordnung 18 erzeugte Bild unmittelbar in Pixelform vorliegt.

In Figur 2 ist ferner deutlich zu erkennen, dass eine auf dem Werkstück 10 vorgesehene Stufe 21 eine gestufte Abbildung der Lichtlinie 15 erzeugt. Die Höhe der Stufe lässt sich dann unter Berücksichtigung der Aufnahmegeometrie, also unter Berücksichtigung der Projektionsrichtung des Lichtfächers 14, der Beobachtungsrichtung und des Abbildungsmafistabes aus dem Pixelabstand der beiden horizontal verlaufenden Abschnitte des Lichtlinienbildes absolut berechnen.

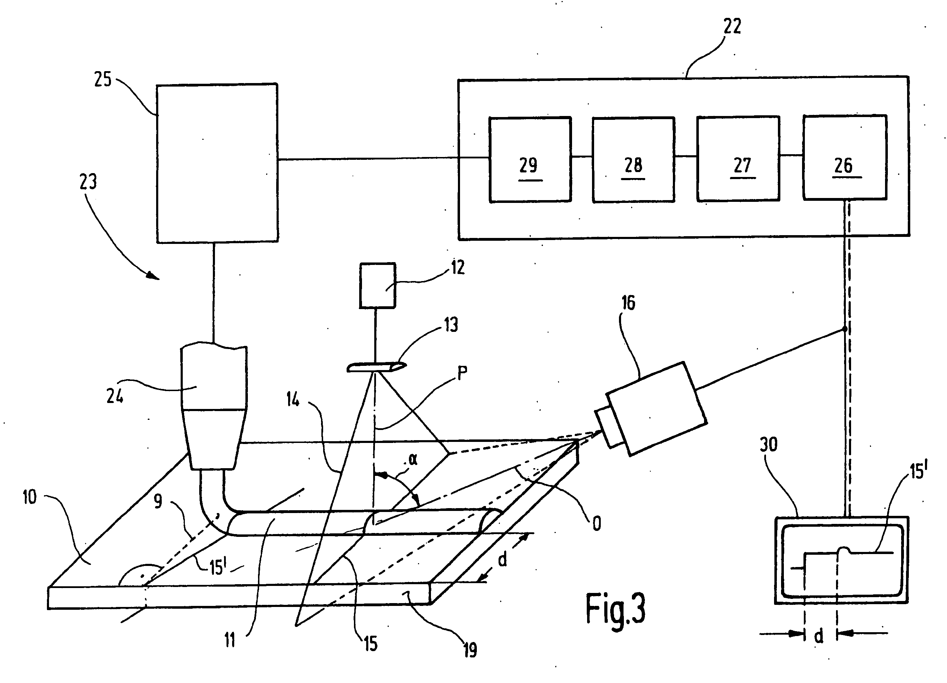

Wie in Figur 3 dargestellt ist, ist ein Ausgang der Kamera 16 an eine Auswerteschaltung 22 angeschlossen, der die Ausgangssignale der Empfängeranordnung, also der CCD Matrix zugeführt werden. Die Auswerteschaltung 22 ermittelt aus den Ausgangssignalen einen Profilverlauf aus dem ein Istwert zumindest eines Parameters, also beispielsweise der Abstand d der Kleberaupe 11 von der Kante 19 des Werkstücks 10 oder auch die Höhe der Kleberaupe oder deren Querschnittsfläche ermittelt wird, der oder die Istwerte des bzw. der zu überwachenden Parameter wird bzw. werden dann mit seinem bzw. ihren Sollwerten verglichen, um zumindest ein Stellsignal an eine Bearbeitungsmaschine 23 auszugeben und so zumindest einen Bearbeitungsparameter zu regeln.

Als Beispiel für eine Bearbeitungsmaschine 23, deren Bearbeitungsprozess mittels des erfindungsgemäßen Verfahrens gesteuert werden kann, ist eine Bearbeitungsmaschine 23 oder ein Roboter dargestellt, der einen Materialstrang, insbesondere eine Klebstoffraupe 11 mittels eines Auftragskopfes 24, der eine entsprechende Austrittsöffnung aufweist, auf die Oberfläche des Werkstücks 10 aufträgt. Der Auftragskopf 24 der Bearbeitungsmaschine 23 wird in Abhängigkeit von entsprechenden Steuer- und Regelsignalen von einer Maschinensteuerung 25 so über das Werkstück 10 geführt, dass die Klebstoffraupe 11 die gewünschte Position einnimmt.

Die mittels Laserdiode 12 und Zylinderlinie 13 erzeugte Lichtlinie 15 ist in Figur 3 der Übersichtlichkeit halber mit Abstand zum Auftragskopf 24 quer über der Klebstofframpe 11 dargestellt. In der Praxis sollte sie jedoch die Klebstofframpe 11 oder die jeweilige Bearbeitungslinie möglichst dicht hinter dem Bearbeitungsbereich kreuzen, um eine möglichst verzögerungsfreie Regelung zu erhalten, wie dies in Figur 3 durch die Linie 15' angedeutet ist. Dabei kann die Lichtlinie wie bei 15 mit der Klebstoffraupe 11 oder der jeweiligen Bearbeitungslinie einen rechten Winkel einschließen. Bei einer bevorzugten Weiterbildung der Erfindung ist jedoch vorgesehen, dass die Lichtlinie wie bei 15' derart geneigt über der Klebstofframpe 11 oder Bearbeitungslinie liegt, dass sie die Kante 19 in dem Punkt schneidet, in dem auch das Lot 9 vom Bearbeitungspunkt auf die Kante 19 diese trifft. Hierdurch lässt sich die Verzögerung in Regelung soweit verkleinern, dass sie praktisch beseitigt ist. Unter "Bearbeitungspunkt" oder "zentraler Punkt des Bearbeitungsbereichs" ist dabei insbesondere das Zentrum des Bearbeitungsbereichs zu verstehen, das durch eine zentrale Achse des Bearbeitungskopfes, also z. B. durch die Mittelachse des durch eine Öffnung austretenden Klebestoffstrangs oder bei einem Laserbearbeitungskopf durch die optische Achse des Bearbeitungsstrahlenganges bestimmt wird.

Falls die zu verfolgende Werkstückstruktur eine gebogene Linie darstellt, ist unter "Lot" der kürzeste Abstand zwischen Bearbeitungsbereich bzw. -punkt und Werkstückstruktur zu verstehen.

Zur Auswertung der Ausgangssignale der Kamera 16 umfasst die Auswerteschaltung 22 vorzugsweise eine Bildverarbeitungseinheit 26, die aus den Bilddaten das Profil der Oberflächenstruktur des Werkstücks 10 im Bereich der Klebstoffraupe 11 und der Werkstückkante 19 ermittelt. Aus dem Profilverlauf leitet dann eine Auswerteeinheit 27 die gewünschten Parameter, also beispielsweise den Abstand d zwischen Kante 19 und Klebstoffraupe 11 oder auch die Höhe und/oder den Querschnitt der Klebstoffraupe 11 ab. Der bzw. die Istwerte des bzw. der als Regelgrößen dienenden Parameter werden dann einer Vergleichseinheit 28 zugeführt, die den oder die Istwerte des oder der Parameter mit seinem oder ihren Sollwerten vergleicht, um entsprechende Regeldifferenzen zu erhalten, die dann einer Regeleinheit 29 zugeführt werden.

Die Regeleinheit 29 ermittelt dann entsprechende Stellsignale, die der Maschinensteuerung 25 zugeführt werden, um die Bearbeitung des Werkstücks mittels des Bearbeitungskopfes, also den Auftrag der Klebstoffraupe 11 auf die Werkstückoberfläche mittels des Auftragkopfes 24 zu regeln.

Wird also beispielsweise der ermittelte Abstand d zwischen Klebstoffraupe 11 und Werkstückkante 19 als Parameter oder Regelgröße gemessen, so wird dieser mit dem Sollabstand verglichen und falls der gemessene Abstand zu groß ist, wird der Auftragskopf 24 näher an die Kante 19 des Werkstücks 10 herangeführt, während im Falle eines zu kleinen gemessenen Abstands d der Auftragskopf weiter von der Kante 19 entfernt wird.

Daneben ist es auch denkbar, den Querschnitt der Klebstoffraupe 11 mit einem Sollquerschnitt zu vergleichen, um festzustellen, ob die aufgetragene Klebstoffmenge den Anforderungen entspricht. Ist die Klebstoffmenge zu gering, ist also der gemessene Querschnitt zu klein, so ist es beispielsweise denkbar, die Vorschubsgeschwindigkeit des Auftragkopfes 24 zu verringern, oder die Austrittsgeschwindigkeit des Klebstoffs zu erhöhen.

Um einer mit der Betreuung der Bearbeitungsmaschine betrauten Person das Einrichten oder Programmieren der Maschine für die Bearbeitung einer Vielzahl von gleichartigen Werkstücken, die Überwachung der Bearbeitungsprozesse und gegebenenfalls auch die Überprüfung der Maschineneinstellungen zu erleichtern, ist zur Darstellung des Lichtlinienbildes 15' ein Bildschirm 30 vorgesehen, der die Bildsignale entweder direkt von der Kamera 16 oder wie durch die gestrichelte Linie angedentet, von der Bildverarbeitungseinheit 26 der Auswerteschaltung 22 erhält. Im letzteren Fall ist es denkbar, dass die Bilddaten zur besseren optischen Darstellung des Lichtlinienbildes 15' auf dem Bildschirm 30 einer geeigneten Bildverarbeitung unterzogen wurden.

Die Erfindung wurde bisher an einem bevorzugten Ausführungsbeispiel, nämlich an einem Verfahren zur Regelung eines automatischen Auftragens einer Klebstoffraupe auf ein Werkstück beschrieben.

Die Erfindung ist jedoch nicht auf das Auftragen von Klebstoff beschränkt sondern sie kann bei allen automatischen Bearbeitungsprozessen eingesetzt werden, wo der Bearbeitungsprozess eine Veränderung der Oberflächenstruktur des Werkstücks 10 nach dessen Bearbeitung ergibt. Insbesondere lässt sich die Erfindung auch zur Steuerung und Regelung eines Schweißprozesses einsetzen, wobei dann die Lichtlinie quer über der Schweißnaht liegt, um deren Breite und/oder Höhe und/oder Lage relativ zu einer linearen Struktur auf der Werkstückoberfläche zu ermitteln. Wird das erfindungsgemäße Verfahren bei einem Schneidprozess, beispielsweise bei einem Laserschneidprozess, eingesetzt, so wird die Lichtlinie quer über die Schnittlinie, also über den sich im Werkstück bildenden linienförmigen Spalt gelegt.

Ferner lässt sich das erfindungsgemäße Verfahren auch beim Beschichten von Werkstückoberflächen, insbesondere beim Pulverbeschichten, einsetzen, wenn z.B. streifenförmige Materialstränge zeilenförmig nacheinander aufgetragen werden, um flächige Beschichtungen zu erhalten.

Um eine Lage eines Bearbeitungskopfes relativ zum Werkstück zu steuern, können nicht nur die Werkstückkanten sondern auch andere linienförmige Strukturen der Werkstückoberfläche benutzt werden. Beispielsweise kann die linienförmige Werkstückstruktur ein Bördelfalz, eine Nut, ein Wulst, ein Steg, eine Stufe oder dergleichen sein.

Die Erfindung kann also überall dort eingesetzt werden, wo eine Werkstückbearbeitung eine definierte Oberflächenstruktur in einem bearbeiteten Bereich des Werkstücks ergibt, aus der sich Informationen über die Eigenschaften der erfolgten Bearbeitung ermitteln lassen.

## Patentansprüche

1. Verfahren zur Steuerung einer Relativbewegung zwischen einem Bearbeitungskopf (24) und einem Werkstück (10) mit einer linienförmigen Werkstückstruktur (19) bei einem automatischen Bearbeitungsprozess, bei dem
- auf einen mittels des Bearbeitungskopfes (24) in einem Bearbeitungspunkt bearbeiteten Bereich des Werkstücks (10) eine Lichtlinie (15) projiziert wird, die eine Bearbeitungslinie (11) dicht hinter dem Bearbeitungspunkt kreuzt, wobei die Lichtlinie (15) der Bewegung des Bearbeitungskopfes (24) folgt,
- die Lichtlinie (15) auf eine Empfängeranordnung (18) abgebildet wird,
- aus dem Lichtlinienbild (15') ein Profil der Werkstückoberfläche im bearbeiteten Bereich ermittelt wird, um einen Abstand (d) zwischen der linienförmigen Werkstückstruktur (19) und der Bearbeitungslinie (11) abzuleiten, und
- der ermittelte Abstand (d) zwischen Bearbeitungslinie (11) und linienförmiger Werkstückstruktur (19) als Regelgröße mit einem Sollabstand verglichen wird, wobei, falls der ermittelte Abstand (d) zu groß ist, der Bearbeitungskopf (24) näher an die linienförmige Werkstückstruktur (19) des Werkstücks (10) herangeführt wird, während im Falle eines zu kleinen ermittelten Abstands (d) der Bearbeitungskopf (24) weiter von der linienförmigen Werkstückstruktur (19) entfernt wird,
**dadurch gekennzeichnet, dass** die Lichtlinie (15) in Richtung der linienförmigen Werkstückstruktur (19) mit der Bearbeitungslinie (11) in Richtung des Bearbeitungspunktes einen Winkel von kleiner 90 Grad einschließt und die Bearbeitungslinie (11) derart schräg kreuzt, dass sie die linienförmige Werkstückstruktur in dem Punkt schneidet, in dem ein von dem Bearbeitungspunkt auf die linienförmige Werkstückstruktur (19) gefälltes Lot (9) diese trifft, so dass der augenblickliche Abstand des Bearbeitungspunktes von der linienförmigen Werkstückstruktur (19) durch Regelung des gemessenen Abstands (d) zwischen Bearbeitungslinie (11) und linienförmiger Werkstückstruktur (19) praktisch verzögerungsfrei geregelt wird.

2. Verfahren nach Anspruch 1, **dadurch gekennzeichnet, dass** die Werkstückstruktur eine Werkstückkante (19), ein Bördelfalz, eine Naht, ein Wulst, ein Steg, oder eine Stufe ist.

3. Verfahren nach einem der vorstehenden Ansprüche, **dadurch gekennzeichnet, dass** der zu regelnde Bearbeitungsprozess ein Schweißprozess ist, und das die Lichtlinie (15) quer über der Schweißnaht liegt.

4. Verfahren nach Anspruch 1 oder 2, **dadurch gekennzeichnet, dass** der zu regelnde Bearbeitungsprozess ein Schneidprozess ist, und dass die Lichtlinie (15) quer über der Schnittlinie liegt.

5. Verfahren nach einen der Ansprüche 1 bis 3, **dadurch gekennzeichnet, dass** der zu regelnde Bearbeitungsprozess ein Auftragen eines Materials ist und dass die Lichtlinie (15) quer über zumindest einer Stufe zwischen aufgetragenem Material und Werkstückoberfläche liegt.

6. Verfahren nach Anspruch 5, **dadurch gekennzeichnet, dass** das aufzutragende Material ein Klebstoff ist, der vorzugsweise als Strang oder Klebstoffraupe (11) aufgetragen wird.

7. Verfahren nach Anspruch 5, **dadurch gekennzeichnet, dass** das aufzutragende Material ein Pulver zur Beschichtung einer Werkstückoberfläche ist.

8. Verfahren nach einem der vorstehenden Ansprüche, **dadurch gekennzeichnet, dass** aus dem Profilverlauf ferner eine Breite und/oder Höhe oder Tiefe und/oder Querschnittsfläche ermittelt wird.

## Claims

1. A method for controlling a relative movement between a treatment head (24) and a workpiece (10) having a linear workpiece structure (19) in an automatic treatment process, in which
- a line of light (15) is projected onto a region of the workpiece (10) treated in a treatment point by means of the treatment head (24), the line of light (15) crosses a treatment line (11) closely behind the treatment point, wherein the line of light (15) follows the movement of the treatment head (24),
- the line of light (15) is projected onto a receiver arrangement (18),
- a profile of the workpiece surface in the region treated is determined from the image of the line of light (15') to derive a distance (d) between the linear workpiece structure (19) and the treatment line (11), and
- the determined distance (d) between the treatment line (11) and the linear workpiece structure (19) is compared as controlled variable with a desired distance,
wherein, if the determined distance (d) is too great, the treatment head (24) is moved closer to the linear workpiece structure (19) of the workpiece (10), while in the case of a determined distance (d) that is too small, the treatment head (24) is moved further away from the linear workpiece structure (19),
**characterized in that** the line of light (15) in the direction of the linear workpiece structure (19) forms an angle of less than 90 degrees with the treatment line (11) in the direction of the treatment point, and crosses the treatment line (11) obliquely in such a way that it intersects the linear workpiece structure (19) at the point at which a perpendicular (9) from the treatment point onto the linear workpiece structure meets the latter, so that the instantaneous distance of the treatment point from linear workpiece structure (19) is regulated virtually delay-free by regulating the measured distance (d) between the treatment line (11) and the linear workpiece structure (19).

2. The method as claimed in claim 1, **characterized in that** the workpiece structure is a workpiece edge (19), an edging fold, a seam, a bead, a web or a step.

3. The method as claimed in any one of the preceding claims, **characterized in that** the treatment process to be regulated is a welding process, and wherein the line of light (15) is located transversely across the weld.

4. The method as claimed in claim 1 or 2, **characterized in that** the treatment process to be regulated is a cutting process, and wherein the line of light (15) is located transversely across the cut line.

5. The method as claimed in any one of claims 1 to 3, **characterized in that** the treatment process to be regulated is an application of a material, and wherein the line of light (15) is located transversely across at least one step between applied material and workpiece surface.

6. The method as claimed in claim 5, **characterized in that** the material to be applied is an adhesive, which is preferably applied as a line or bead of adhesive (11).

7. The method as claimed in claim 5, **characterized in that** the material to be applied is a powder for coating a workpiece surface.

8. The method as claimed in any one of the preceding claims, **characterized in that** a width and/or height or depth and/or cross-sectional area is/are further determined from the course of the profile.

## Revendications

1. Procédé pour la commande d'un mouvement relatif entre une tête d'usinage (24) et une pièce à oeuvrer (10) avec une structure de pièce (19) à forme linéaire dans un processus d'usinage automatique, dans lequel
- sur une zone de la pièce à oeuvrer (10) qui a été usinée au moyen de la tête d'usinage (24) à un point d'usinage on projette une ligne lumineuse (15) qui croise une ligne d'usinage (11) à très faible distance derrière le point d'usinage, ladite ligne lumineuse (15) suivant le mouvement de la tête d'usinage (24),
- une image de la ligne lumineuse (15) est formée sur un agencement récepteur (18),
- à partir de l'image de la ligne lumineuse (15') on détermine un profil de la surface de la pièce à oeuvrer dans la zone usinée, afin de dériver une distance (d) entre la structure de la pièce à oeuvrer (19) à forme linéaire et la ligne d'usinage (11), et
- on compare la distance déterminée (d) entre la ligne d'usinage (11) et la structure de la pièce à oeuvrer (19) à forme linéaire à titre de grandeur de régulation avec une distance de consigne et, si la distance déterminée (d) est trop grande, la tête d'usinage (24) est rapprochée plus près de la structure (19) à forme linéaire de la pièce à oeuvrer (10), alors que dans le cas où la distance déterminée (d) est trop petite, la tête d'usinage (24) est éloignée plus loin de la structure (19) de la pièce à oeuvrer à forme linéaire,
**caractérisé en ce que** la ligne lumineuse (15) en direction de la structure (19) de la pièce à oeuvrer à forme linéaire, définit avec la ligne d'usinage (11) en direction du point d'usinage un angle inférieur à 90°, et croise la ligne d'usinage (11) en oblique de telle façon qu'elle recoupe la structure de la pièce à oeuvrer à forme linéaire au niveau du point où une verticale (9) tirée depuis le point d'usinage tombe sur la structure (19) de la pièce à oeuvrer à forme linéaire, de sorte que la distance instantanée du point d'usinage depuis la structure (19) à forme linéaire est régulée pratiquement sans retard par régulation de la distance mesurée (d) entre la ligne d'usinage (11) et la structure (19) de la pièce à oeuvrer à forme linéaire.

2. Procédé selon la revendication 1, **caractérisé en ce que** la structure de la pièce à oeuvrer est une arête (19), une feuillure de rabattement, un cordon, un bourrelet, une barrette, ou un gradin.

3. Procédé selon l'une des revendications précédentes, **caractérisé en ce que** le processus d'usinage à réguler est un processus de soudage, et **en ce que** la ligne lumineuse (15) est posée transversalement sur le cordon de soudure.

4. Procédé selon la revendication 1 ou 2, **caractérisé en ce que** le processus d'usinage à réguler est un processus de coupe, et **en ce que** la ligne lumineuse (15) est posée transversalement sur la ligne de coupe.

5. Procédé selon l'une des revendications 1 à 3, **caractérisé en ce que** le processus d'usinage à réguler est un apport d'un matériau, et **en ce que** la ligne lumineuse (15) est posée transversalement sur au moins un gradin entre le matériau apporté et la surface de la pièce à oeuvrer.

6. Procédé selon la revendication 5, **caractérisé en ce que** le matériau à apporter est une colle, qui est être de préférence apportée sous la forme d'un filet ou d'un cordon de colle (11).

7. Procédé selon la revendication 5, **caractérisé en ce que** le matériau à apporter est une poudre pour le revêtement d'une surface de la pièce à oeuvrer.

8. Procédé selon l'une des revendications précédentes, **caractérisé en ce que** l'on détermine en outre à partir du tracé du profilé une largeur et/ou une hauteur ou une profondeur et/ou une surface de section transversale.
